# EUROPÄISCHE PATENTSCHRIFT

(11) **EP 3 691 989 B1**
(45) Veröffentlichungstag und Bekanntmachung des Hinweises auf die Patenterteilung: **11.09.2024**
(21) Anmeldenummer: 18755811.9
(22) Anmeldetag: 16.08.2018
(51) Int. Cl.: C01B 3/22, C01B 3/50

(54) **ANLAGE UND VERFAHREN ZUR BEREITSTELLUNG UND WEITEREN NUTZUNG VON WASSERSTOFFGAS**
APPARATUS AND METHOD FOR PROVIDING HYDROGEN GAS AND ITS FURTHER USE
APPAREIL ET PROCEDE DE PRODUCTION D'HYDROGENE ET SON UTILISATION ULTERIEURE

(30) Priorität: 05.10.2017 DE 102017217748
(43) Veröffentlichungstag der Anmeldung: 12.08.2020
(73) Patentinhaber: HYDROGENIOUS LOHC TECHNOLOGIES GMBH, 91058 Erlangen (DE)
(72) Erfinder: PAETZ, Caspar, 91054 Erlangen (DE); TEICHMANN, Daniel, 80796 München (DE); MELCHER, Berthold, 91052 Erlangen (DE); SCHNEIDER, Martin, 91056 Erlangen (DE)
(74) Vertreter: Rau, Schneck & Hübner Patentanwälte Rechtsanwälte PartGmbB
(86) Internationale Anmeldenummer: PCT/EP2018/072183
(87) Internationale Veröffentlichungsnummer: WO 2019/068387

(56) Entgegenhaltungen:
- EP-A1- 2 833 457
- EP-A1- 2 905 255
- EP-A1- 3 281 912
- EP-A1- 3 281 912
- WO-A1-2013/042500
- WO-A1-2013/042500
- WO-A1-2016/161955
- WO-A1-2016/161955
- WO-A1-2017/102285
- WO-A1-2017/102285
- DE-A1- 102010 038 491

## Beschreibung

Die vorliegende Patentanmeldung nimmt die Priorität der deutschen Patentanmeldung DE 10 2017 217 748.9 in Anspruch.

Die Erfindung betrifft eine Anlage und ein Verfahren zur Bereitstellung und weiteren Nutzung von Wasserstoffgas.

EP 2 905 255 A1 offenbart ein Wasserstoffversorgungssystem. EP 2 833 457 A1 offenbart ein Brennstoffzellenmodul und ein Brennstoffzellensystem.

Wasserstoffgas kann zur Verstromung in einer Brennstoffzelle genutzt werden. Dafür muss das Wasserstoffgas mit einer hohen Reinheit von beispielsweise mindestens 99,9 % bereitgestellt werden. Verunreinigungen wie Kohlenmonoxid (CO) oder Kohlenwasserstoffe (TOC) sind besonders nachteilig und beeinträchtigen den Betrieb der Brennstoffzelle.

Eine bekanntes Verfahren zum Bereitstellen von Wasserstoffgas ist die Dehydrierung eines Wasserstoffträgermediums, insbesondere eines flüssigen organischen Wasserstoffträgermediums, das auch als liquid organic hydrogen carrier (LOHC) bekannt ist. Aus JP 2002/134141 A ist bekannt, aus einem Gasgemisch aus der LOHC-Dehydrierung Wasserstoffgas abzutrennen. Der Aufwand für die Aufreinigung des Wasserstoffgases aus der LOHC-Dehydrierung ist groß, sodass das aufgereinigte Wasserstoffgas möglichst vollständig verstromt werden soll. Der maximale Wirkungsgrad für die Brennstoffzelle beträgt 55 %. Der rechnerische Gesamtwirkungsgrad, der sich aus dem Wirkungsgrad für die Brennstoffzelle, dem Wirkungsgrad für eine Hydrierung des Wasserstoffträgermediums von 98 % und der späteren Dehydrierung des Wasserstoffträgermediums von 70 % ergibt, beträgt höchstens 38 %. Der reale Wirkungsgrad der Brennstoffzelle beträgt typischerweise zwischen 45 % und 50 %, sodass der reale Gesamtwirkungsgrad etwa 30 % bis 34 % beträgt.

Der Erfindung liegt die Aufgabe zugrunde, die Bereitstellung von Wasserstoffgas, insbesondere für die Nutzung in einer Brennstoffzelle, zu verbessein, insbesondere die Effizienz, also den Wirkungsgrad, insbesondere bis an das theoretische Maximum des Gesamtwirkungsgrades von 38 %, zu erhöhen.

Die Aufgabe wird durch eine Anlage mit den im Anspruch 1 angegebenen Merkmalen und mit einem Verfahren mit den im Anspruch 5 angegebenen Merkmalen gelöst. Der Kern der Erfindung besteht darin, dass Wasserstoffgas aus einem aus einer Dehydriereinheit stammenden Gasgemisch in einer Trenn-/Reinigungseinheit zumindest teilweise abgetrennt und gereinigt wird. Überraschend wurde gefunden, dass der Gesamtwirkungsgrad des Verfahrens erhöht ist, wenn nur ein Teilstrom des Gasgemisches für eine spätere Verstromung gereinigt wird. Der Aufwand für die Reinigung des zu verstromenden Teilstroms ist reduziert, sodass der Gesamtwirkungsgrad erhöht ist. Besonders vorteilhaft ist es, wenn die Trenn-/Reinigungseinheit eine Trennmembran zur Separation des Wasserstoffgases aus dem Gasgemisch und zur Reinigung des Wasserstoffgases aufweist. Der Erfindung liegt auch die Erkenntnis zugrunde, dass eine Trennmembran zur Aufreinigung von Wasserstoffgas aus der LOHC-Dehydrierung genutzt werden kann. Ein aus dem Stand der Technik bekanntes zweistufiges Verfahren mit einem vorgelagerten Separationsschritt und einem nachgelagerten Reinigungsschritt kann erfindungsgemäß als kombinierter, einstufiger Prozess mittels der Trennmembran erfolgen. Das Verfahren, insbesondere der Aufwand für die Aufreinigung des Wasserstoffgases, ist reduziert. Der wesentliche Vorteil der Erfindung besteht darin, dass der Gesamtwirkungsgrad erhöht und zugleich der Reinigungsaufwand für das Wasserstoffgas verringert ist.

Sofern als Wasserstoffträgermedium LOHC verwendet wird, wird der Wasserstoff durch eine katalysierte Dehydrierreaktion aus einem organischen Molekül oder aus einer Mischung organischer Moleküle freigesetzt. Das bedeutet, dass die Freisetzung des Wasserstoffs durch eine stoffliche Umwandlung des beladenen Trägermediums durch Entladung in der Entlade-Einheit mittels katalysierter Dehydrierreaktion erfolgt. Im beladenen Zustand ist das Trägermedium insbesondere eine gesättigte, polyzyklische Verbindung, insbesondere ein Perhydro-Dibenzyltoluol oder ein Perhydro-Benzyltoluol, die als Reinstoffe, isomere Gemische oder Mischungen untereinander verwendet werden können. Alternativ ist das beladene Trägermedium eine gesättigte, polyzyklische Verbindung, die Heteroatome wie Stickstoff oder Sauerstoff enthalten, insbesondere Perhydro-N-Ethylcarbazol, Perhydro-N-Propylcarbazol, Perhydro-N-Isopropylcarbazol, Perhydro-N-Butylcarbazol oder Mischungen dieser Substanzen. Alternativ können als beladenes Trägermedium auch ein gesättigtes organisches Oligomer oder Polymer verwendet werden, die sich durch katalytische Dehydrierung in Oligomere oder Polymere mit ausgedehntem π-konjugierten Elektronensystem umsetzen lassen. Das Entladen der beladenen Trägermedien in der Entlade-Einheit erfolgt insbesondere in einem druckstabilen chemischen Reaktor bei einer Prozesstemperatur zwischen 100 °C und 450 °C, bevorzugt zwischen 150 °C und 420 °C und insbesondere zwischen 180 °C und 390 °C. Der Prozessdruck liegt zwischen 0,1 und 30 bar, insbesondere zwischen 1 und 10 bar, wobei insbesondere ein metallhaltiger Katalysator eingesetzt werden kann, der insbesondere Platin und/oder Palladium enthält. Wesentlich ist, dass der Katalysator geeignet ist, Wasserstoff, der vom LOHC-Trägermedium abgegeben wird, als Wasserstoffgas freisetzen kann. Neben Platin und/oder Palladium sind dafür insbesondere Metalle wie Chrom, Eisen, Kobalt, Nickel, Kupfer, Iridium oder Ruthenium, geeignet.

Eine mit der Trenn-/Reinigungseinheit über eine erste Fluidleitung verbundene Nutzeinheit ermöglicht die unmittelbare Nutzung des abgetrennten, gereinigten Wasserstoffgases, insbesondere durch Verstromen in einer Verstromungseinheit. Die Nutzeinheit kann auch in einer anderen Weise ausgeführt sein, um das Wasserstoffgas stofflich zu nutzen. Die Verstromungseinheit ist insbesondere eine Brennstoffzelle, die insbesondere eine Polymer-Elektrolyt-Membran aufweist, insbesondere eine PEM-Brennstoffzelle.

Eine mit der Trenn-/Reinigungseinheit über eine zweite Fluidleitung verbundene thermische Verwertungseinheit, insbesondere ein Wasserstoffbrenner, ermöglicht die vorteilhafte Erhöhung des Gesamtwirkungsgrades der Anlage, indem ein Restgasgemisch vorteilhaft verbrannt und damit thermisch nutzbar ist. Das Restgasgemisch ist der Teilstrom des Gasgemisches aus der Dehydriereinheit, aus dem das Wasserstoffgas abgetrennt worden ist. Das Restgasgemisch ist insbesondere ungereinigt und kann Verunreinigungen, insbesondere in Form von Kohlenwasserstoffverbindungen, aufweisen. Derartige Verunreinigungen sind für die thermische Verwertung des Restgasgemisches unproblematisch. Dem liegt die Erkenntnis zugrunde, dass die nur teilweise Aufreinigung ausreichend für die Verstromung des Wasserstoffgases in der Brennstoffzelle einerseits und andererseits unproblematisch für die thermische Verwertung des Restgasgemisches in der thermischen Verwertungseinheit ist.

Eine Verbindung der thermischen Verwertungseinheit mit der Verstromungseinheit zum Zuführen eines Abgasstroms aus der Verstromungseinheit ermöglicht eine zusätzliche Erhöhung des Gesamtwirkungsgrades, indem Rest-Wasserstoff, insbesondere aus der Brennstoffzelle, dem Wasserstoffbrenner zugeführt wird. Es wurde gefunden, dass eine weitere Erhöhung des Gesamtwirkungsgrades möglich ist, wenn das abgetrennte, gereinigte Wasserstoffgas anteilig, insbesondere nicht vollständig, in der Verstromungseinheit verstromt wird. Der auf die Verstromung gerichtete Teilwirkungsgrad wird dadurch erhöht, insbesondere auf bis zu 55 %, da der Aufwand für die Verstromung in der Brennstoffzelle reduziert wird. Der reale Gesamtwirkungsgrad kann auf bis zu 38 % gesteigert werden. Der maximale Wirkungsgrad für die Brennstoffzelle wird nicht erreicht, wenn eine Vollausnutzung, also eine vollständige Verstromung des eingehenden Wasserstoffstroms erfolgt.

Ein elektrochemischer Kompressor gemäß Anspruch 2 ermöglicht eine vorteilhafte Wasserstoffabtrennung in der Trenn-/Reinigungseinheit. Durch Anlegen einer elektrischen Spannung wird der Durchtritt des Wasserstoffgases durch die Trennmembran gefördert, während andere Substanzen, insbesondere Verunreinigungen, die Membran nicht durchdringen können. Insbesondere kann durch gezieltes Anlegen der elektrischen Spannung der Anteil des abzutrennenden Gasstroms gezielt beeinflusst werden, sodass der Mengenanteil des abgetrennten, gereinigten Wasserstoffgases zu der Verstromungseinheit einstellbar ist. Insbesondere ist der erforderlich Absolutdruck, der in der Dehydriereinheit angelegt wird, reduziert. Dadurch ist der Aufwand zum Betreiben der Dehydriereinheit reduziert, sodass der Gesamtwirkungsgrad der Anlage zusätzlich erhöht ist. Der für die Brennstoffzelle erforderliche Betriebsdruck wird mittels des elektrochemischen Kompressors bereitgestellt.

Eine Wascheinheit gemäß Anspruch 3 ist insbesondere als Gaswascheinheit ausgeführt, um insbesondere tröpfchenförmige LOHC-Anteile aus dem Gasgemisch zu trennen. Die Wascheinheit ist insbesondere stromaufwärts zur thermischen Verwertungseinheit angeordnet. Zusätzlich oder alternativ kann eine Wascheinheit stromaufwärts der Trenn-/Reinigungseinheit angeordnet sein.

Eine Wärmeübertragungseinheit gemäß Anspruch 4 dient zur weiteren Erhöhung des Gesamtwirkungsgrades. Wärme, die aus der Verbrennung des Wasserstoffs stammt, kann unmittelbar der Dehydriereinheit zugeführt werden, um die dort notwendige Reaktionsenthalpie für das Freisetzen des Wasserstoffgases aufzubringen. Vorteilhaft ist es, wenn der Anteil des Restgasgemisches mengenmäßig derart bestimmt wird, dass die in der thermischen Verwertungseinheit erzeugte Wärme gerade ausreichend ist, um die Reaktionsenthalpie für die Dehydrierung bereitzustellen. Dazu kann eine zentrale Regelungseinheit vorgesehen sein, um den Wärmebedarf in der Dehydriereinheit einerseits und die Abtrennung des Wasserstoffgases aus dem Gasgemisch in der Trenn-/Reinigungseinheit andererseits zu überwachen und zu regeln. Als Stellgröße zur Regelung, insbesondere für die Abtrennung des Wasserstoffgases aus dem Gasgemisch kann die dem elektrochemischen Kompressor zugeführte elektrische Energie bzw. die angelegte Spannung genutzt werden. Zusätzlich oder alternativ kann Abwärme aus der Verstromungseinheit mittels der Wärmeübertragungseinheit der Dehydriereinheit rückgeführt werden.

Die Vorteile des erfindungsgemäßen Verfahrens gemäß den Ansprüchen 5 bis 10 entsprechen den jeweiligen Vorteilen der korrespondierenden Anlage, worauf hiermit verwiesen wird.

Das Verfahren, bei dem das zumindest teilweise Abtrennen eine Ausbeute des Wasserstoffgases bezogen auf das der Trenn-/Reinigungseinheit zugeführte Gasgemisch von höchstens 80 % bewirkt, weist eine vorteilhafte Aufteilung des Gasgemisches in Teilströme auf. Überraschend wurde gefunden, dass der Gesamtwirkungsgrad des Verfahrens erhöht werden kann, wenn aus dem Gasgemisch, das der Trenn-/Reinigungseinheit zugeführt wird, ein Teilstrom von höchstens 80 % und insbesondere höchstens 75 % abgetrennt und für die nachfolgende Verstromung gereinigt wird. Das nicht abgetrennte Restgasgemisch kann unmittelbar zur thermischen Verwertung abgeführt werden. Etwaige Verunreinigungen im Restgasgemisch sind unproblematisch.

Ein Verfahren gemäß Anspruch 7 ist wirtschaftlich durchführbar und ermöglicht eine Erhöhung des Gesamtwirkungsgrades. Der Aufwand für die Druckerzeugung in der Dehydriereinheit ist reduziert. Vorteilhaft ist, dass die Druckerzeugung mittels der elektrochemischen Kompression ein erhöhtes Druckniveau in der Trenn-/Reinigungseinheit derart zur Verfügung stellt, dass das Wasserstoffgas vielfältig genutzt werden kann. Neben der Verstromung des Wasserstoffgases in einer Verstromungseinheit kommt beispielsweise auch eine stoffliche Nutzung des Wasserstoffgases in Betracht. Der mittels der elektrochemischen Kompression erreichbare Wasserstoffdruck beträgt insbesondere mehr als 5 bar, insbesondere mehr als 10 bar, sodass insbesondere eine zusätzliche Kompressionsstufe entbehrlich ist. Der apparative und anlagentechnische Aufwand ist reduziert. Das Verfahren ist unaufwändig und vorteilhaft durchführbar.

Ein Verfahren gemäß Anspruch 8 weist einen erhöhten Gesamtwirkungsgrad auf. Der Aufwand für die Bereitstellung von Wärme in der Dehydriereinheit ist reduziert.

Ein Verfahren gemäß Anspruch 10 reduziert den Gesamt-Wärmebedarf.

Ein Verfahren gemäß Anspruch 11 ermöglicht eine Steigerung des Teilwirkungsgrades der Verstromungseinheit, insbesondere der Brennstoffzelle. Dadurch, dass gezielt lediglich eine Teilmenge des abgetrennten, gereinigten Wasserstoffgases, das der Verstromungseinheit zugeführt worden ist, verstromt wird, ist der Teilwirkungsgrad der Brennstoffzelle für diese teilweise Verstromung erhöht. Besonders vorteilhaft ist, dass der nicht verstromte Anteil des Wasserstoffgases unmittelbar der thermischen Verwertungseinheit zugeführt und energetisch sinnvoll genutzt werden kann. Besonders vorteilhaft ist es, wenn die Menge des nicht verstromten Wasserstoffgases mindestens 5 %, insbesondere mindestens 8 %, insbesondere mindestens 10 % und insbesondere mindestens 15 % des Wasserstoffgases betragen.

Sowohl die in den Patentansprüchen angegebenen Merkmale als auch die in den nachfolgenden Ausführungsbeispielen einer erfindungsgemäßen Anlage angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildung des Erfindungsgegenstandes keine Einschränkung dar, sondem weisen im Wesentlichen lediglich beispielhaften Charakter auf. Weitere Merkmale und Vorteile der Erfindung ergeben sich aus der nachfolgenden Beschreibung von Ausführungsbeispielen anhand der Zeichnungen. Es zeigen:
- Fig. 1: eine schematische Darstellung einer erfindungsgemäßen Anlage zur Bereitstellung und zur Nutzung von Wasserstoffgas,
- Fig. 2: eine schematische Darstellung einer Trenn-/Reinigungseinheit gemäß einem ersten Ausführungsbeispiel der Anlage in Fig. 1,
- Fig. 3: eine Fig. 2 entsprechende Darstellung einer Trenn-/Reinigungseinheit gemäß einem zweiten Ausführungsbeispiel.

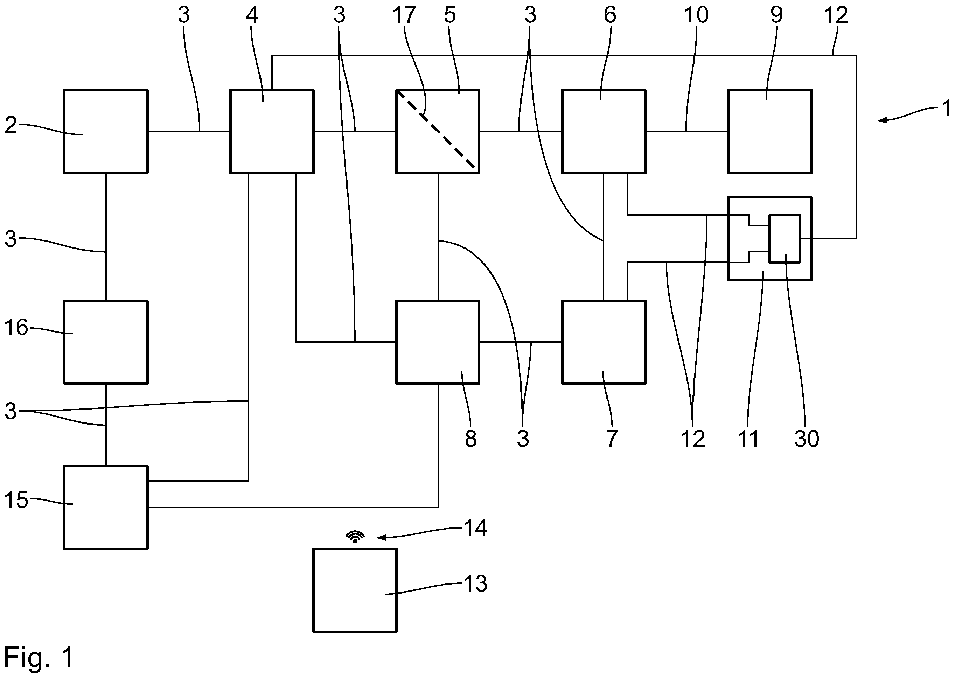

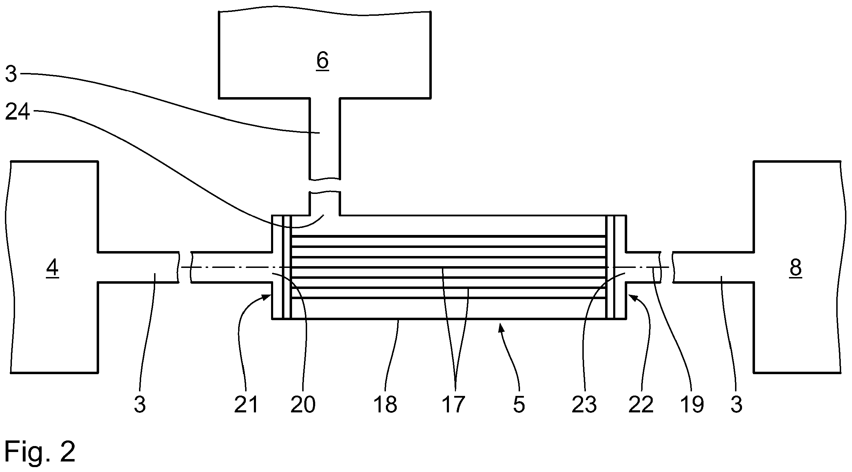

Eine in Fig. 1 und 2 gezeigte Anlage 1 dient zur Bereitstellung und zur Nutzung von Wasserstoffgas. Die Anlage 1 umfasst einen ersten Speicherbehälter 2, in dem zumindest teilweise beladenes Wasserstoffträgermedium in Form von LOHC bevorratet ist. Der erste Speicherbehälter 2 ist mittels einer Fluidleitung 3 mit einer Dehydriereinheit 4 verbunden. Die Fluidleitung 3 ist insbesondere eine Rohrleitung zum Fördern von Flüssigkeiten und/oder Gas. Die Dehydriereinheit 4 ist mittels einer weiteren Fluidleitung 3 mit einer Trenn-/Reinigungseinheit 5 verbunden. Die Trenn-/Reinigungseinheit 5 weist eine Trennmembran 17 zum Abtrennen und zum Reinigen des Wasserstoffgases aus dem Gasgemisch auf.

Die Trenn-/Reinigungseinheit 5 ist mittels einer weiteren Fluidleitung 3 mit einer Verstromungseinheit 6 in Form einer Brennstoffzelle verbunden. Die Trenn-/Reinigungseinheit 5 ist über eine Fluidleitung 3 mit einer thermischen Verwertungseinheit 7 verbunden. Die thermische Verwertungseinheit 7 ist in Form eines Wasserstoffbrenners ausgeführt. Entlang der Fluidleitung 3 ist zwischen der Trenn-/Reinigungseinheit 5 und der thermischen Verwertungseinheit 7 eine Wascheinheit 8 in Form eines Gaswäschers vorgesehen.

Zusätzlich oder alternativ zu der Wascheinheit 8 kann eine weitere, nicht dargestellte Wascheinheit 8 stromaufwärts der Trenn-/Reinigungseinheit 5, insbesondere zwischen der Dehydriereinheit 4 und der Trenn-/Reinigungseinheit 5, angeordnet sein.

Die Verstromungseinheit 6 ist mit der thermischen Verwertungseinheit 7 über eine weitere Fluidleitung 3 verbunden.

Die Verstromungseinheit 6 ist mit einem Stromverbraucher 9 über eine elektrische Leitung 10 verbunden. Der Stromverbraucher 9 dient zum Aufnehmen und/oder Verbrauchen des in der Verstromungseinheit 6 erzeugten elektrischen Stroms. Der Stromverbraucher 9 kann unmittelbar zum Stromverbrauchen dienen. Der Stromverbraucher 9 kann auch ein privates oder öffentliches Stromnetz sein, in das der erzeugte elektrische Strom eingespeist wird, um weiteren Verbrauchern, die an das Stromnetz angeschlossen sind, den elektrischen Strom zur Verfügung zu stellen.

Die Anlage 1 umfasst ferner eine Wärmeübertragungseinheit 11, die gemäß dem gezeigten Ausführungsbeispiel mit der thermischen Verwertungseinheit 7 und mit der Verstromungseinheit 6 über eine Wärmeleitung 12 verbunden ist. Die Wärmeleitung 12 dient zum Fördern eines Wärmeträgermediums, insbesondere einer Wärmeträgerflüssigkeit. Die Wärmeübertragungseinheit 11 ist mit einer weiteren Wärmeleitung 12 mit der Dehydriereinheit 4 zum Bereitstellen von Wärme verbunden.

Die Wärmeübertragungseinheit 11 kann mit einem Wärmespeicher 30 verbunden sein, um die Wärme aus der Verstromungseinheit 6 und/oder der thermischen Verwertungseinheit 7 zu speichern und zeitlich entkoppelt, zu einem späteren Zeitpunkt verfügbar zu machen. Der Wärmespeicher 30 ist gemäß dem gezeigten Ausführungsbeispiel in der Wärmeübertragungseinheit 11 integriert. Der Wärmespeicher 30 kann auch extern, also zusätzlich zu der Wärmeübertragungseinheit 11 ausgeführt sein.

Die Anlage 1 weist ferner eine Regelungseinheit 13 auf, die mittels Signalleitungen 14 mit den Komponenten der Anlage 1 in Signalverbindung steht. Die Signalleitung 14 ist in Fig. 1 symbolisch durch eine drahtlose Signalübertragung dargestellt. Die Signalleitung 14 kann auch kabelgebunden ausgeführt sein. Insbesondere ist die Regelungseinheit 13 mit der Dehydriereinheit 4, der Trenn-/Reinigungseinheit 5, der Verstromungseinheit 6, der thermischen Verwertungseinheit 7, dem Stromverbraucher 9 und/oder der Wärmeübertragungseinheit 11 verbunden.

Die Dehydriereinheit 4 ist über eine Fluidleitung 3 mit der Wascheinheit 8 verbunden. Die Wascheinheit 8 ist über eine weitere Fluidleitung 3 mit einem zweiten Speicherbehälter 15 verbunden. Der zweite Speicherbehälter 15 dient zur Speicherung von zumindest teilweise dehydriertem Wasserstoffträgermedium, insbesondere in Form von LOHC. Die Dehydriereinheit 4 kann mittels einer zusätzlichen Fluidleitung 3 unmittelbar mit dem zweiten Speicherbehälter 15 verbunden sein.

Es ist grundsätzlich denkbar, nur einen einzigen Speicherbehälter anstelle des ersten Speicherbehälters 2 und des zweiten Speicherbehälters 15 vorzusehen. In diesem Fall kann zumindest teilweise hydriertes und zumindest teilweise dehydriertes Wasserstoffspeichermedium in ein und demselben Speicherbehälter gelagert werden.

Der zweite Speicherbehälter 15 ist über eine Fluidleitung 3 mit einer Hydriereinheit 16 verbunden. Die Hydriereinheit 16 ist mittels einer weiteren Fluidleitung 3 mit dem ersten Speicherbehälter 2 verbunden. Die Hydriereinheit 16 kann auch entfallen.

Wenn die Hydriereinheit 16 vorgesehen ist, kann das Wasserstoffspeichermedium in einem Kreislaufprozess mit Wasserstoffgas angereichert, also beladen, und zur Freisetzung von Wasserstoffgas genutzt, also entladen, werden. Dies ist mit der kreislaufförmigen Anordnung der Dehydriereinheit 4, des zweiten Speicherbehälters 15, der Hydriereinheit 16 und des ersten Speicherbehälters 2 möglich, die in der genannten Reihenfolge jeweils durch eine Fluidleitung 3 miteinander paarweise verbunden sind. Es ist insbesondere möglich, saisonal und/oder tageszeitenabhängig während eines energiereichen Zeitraums, insbesondere wenn elektrischer Strom mittels regenerativer Energien erzeugt werden kann durch Sonneneinstrahlung oder Wind, elektrischen Strom zu erzeugen und für die Elektrolyse und die Hydrierung des Wasserspeichermediums in der Hydriereinheit 16 zu nutzen. Entsprechend kann mittels der Dehydriereinheit 4 Wasserstoffgas in dem Gasgemisch bereitgestellt werden, insbesondere während eines energiearmen Zeitraums, wenn ein Energiedefizit vorliegt, also Energie benötigt wird.

Nachfolgend wird anhand der Fig. 1 ein Verfahren zur Bereitstellung und zur Nutzung von Wasserstoffgas mittels der Anlage 1 näher erläutert. Zumindest teilweise beladenes LOHC wird aus dem ersten Speicherbehälter 2 über die Fluidleitung 3 in die Dehydriereinheit 4 gefördert. In der Dehydriereinheit 4 wird das Wasserstoffträgermedium zumindest teilweise dehydriert und dadurch ein Gasgemisch freigesetzt. Das freigesetzte Gasgemisch enthält Wasserstoffgas.

Das Gasgemisch wird aus der Dehydriereinheit 4 über die Fluidleitung 3 der Trenn-/Reinigungseinheit 5 zugeführt. Mittels der Trennmembran 17 wird Wasserstoffgas aus dem Gasgemisch zumindest teilweise abgetrennt und gereinigt. Insbesondere beträgt der Volumenstrom des abgetrennten Wasserstoffgases bezogen auf das der Trenn-/Reinigungseinheit 5 zugeführte Gasgemisch höchstens 85 %, insbesondere höchstens 80 % und insbesondere höchstens 75 %.

Der abgetrennte Teilstrom des Wasserstoffgases weist eine Reinheit von mindestens 99,9 %, insbesondere mindestens 99,99 % auf. Der gereinigte Teilstrom des Wasserstoffgases wird über die Fluidleitung 3 der Verstromungseinheit 6 zugeführt und unmittelbar verstromt. Die Verstromungseinheit 6 ist als Brennstoffzelle ausgeführt. In der Brennstoffzelle wird lediglich ein Teilstrom des zugeführten Wasserstoffgases verstromt. Ein nicht verstromter Restanteil des Wasserstoffgases, der gemäß dem gezeigten Ausführungsbeispiel etwa 10 % beträgt, wird zur thermischen Verwertung der thermischen Verwertungseinheit 7 zugeführt und dort verbrannt.

Beispielsweise kann das Gasgemisch aus der Dehydriereinheit 4 in der Trenn-/Reinigungseinheit 5 so aufgeteilt werden, dass 80 % des Wasserstoffs als abgetrennter, gereinigter Teilstrom der Verstromungseinheit 6 zugeführt werden. Das Restgasgemisch mit 20 % Wasserstoffanteil wird, gegebenenfalls über die Wascheinheit 8, der thermischen Verwertungseinheit 7 zugeführt. Der gereinigte Teilstrom mit 80 % Wasserstoffgas wird in der Verstromungseinheit 6 lediglich teilweise, insbesondere nicht vollständig, verstromt. Der nicht verstromte Restanteil des Wasserstoffgases von beispielsweise 10 % wird von der Verstromungseinheit 6 der thermischen Verwertungseinheit, insbesondere dem Wasserstoffbrenner 7 zugeführt und dort verbrannt. Bei dieser Verfahrensführung werden also 70 % Wasserstoffanteil verstromt und 30 % Wasserstoffanteil thermisch verwertet, also verbrannt. Dadurch, dass eine vollständige Verstromung in der Verstromungseinheit 6 vermieden ist, ist der Gesamtwirkungsgrad höher und beträgt insbesondere 38 %.

Bei einer Verfahrensführung derart, dass in der Trenn-/Reinigungseinheit 5 ein Restgasgemisch mit 30 % Wasserstoffgas abgetrennt wird, müssten in der Verstromungseinheit die 70 % Wasserstoffgasanteil vollständig verstromt werden. Dadurch wäre der Wirkungsgrad reduziert, insgesamt auf etwa 35 %.

Die erzeugte elektrische Leistung kann über die elektrische Stromleitung 10 dem Stromverbraucher 9 zugeführt werden.

Das Restgasgemisch, dass nach dem Abtrennen des Wasserstoffgases aus der Trenn-/Reinigungseinheit 5 abgeführt wird, wird über die Fluidleitung 3 der Wascheinheit 8 zugeführt. In der Wascheinheit 8 kann das Restgasgemisch zumindest teilweise dehydriertem LOHC aus der Dehydriereinheit 4 eingedüst werden. Dadurch wird das Restgasgemisch von Tröpfchen befreit. Das so gereinigte Restgasgemisch wird aus der Wascheinheit 8 über die Fluidleitung 3 der thermischen Verwertungseinheit 7 zugeführt und dort verbrannt. Das dehydrierte, also zumindest teilweise entladene LOHC, wird aus der Wascheinheit 8 über die Fluidleitung dem zweiten Speicherbehälter 15 zugeführt. Da insbesondere nicht der gesamte Mengenstrom des LOHC aus der Dehydriereinheit 4 für die Gaswäsche in der Wascheinheit 8 benötigt wird, kann ein Teilstrom des LOHC über die Fluidleitung 3 unmittelbar aus der Dehydriereinheit 4 in den zweiten Speicherbehälter 15 rückgeführt werden. Das dehydrierte LOHC aus der Dehydriereinheit 4 und/oder der Wascheinheit 8 kann aus dem zweiten Speicherbehälter 15 und/oder unmittelbar transportiert werden. Für den Abtransport können Transportfahrzeuge und/oder eine Transportleitung dienen. Das dehydrierte LOHC kann auch innerhalb der Anlage 1 mittels der Hydriereinheit 16 wieder hydriert, also mit Wasserstoffgas beladen werden und über die Fluidleitung 3 dem ersten Speicherbehälter 2 zugeführt werden. Insbesondere ist es möglich, innerhalb der Anlage 1 ein geschlossenes Kreislaufsystem zum katalytischen Hydrieren und Dehydrieren des Wasserstoffträgermediums bereitzustellen.

Wärme, die in der Verstromungseinheit 6 und der thermischen Verwertungseinheit 7 entsteht, wird über die Wärmeübertragungseinheit 11 und die Wärmeleitungen 12 der Dehydriereinheit 4 zur Verfügung gestellt. Der Wärmebedarf für die Reaktionsenthalpie der Wasserstofffreisetzung ist dadurch reduziert. Insbesondere ist eine separate Zuheizung entbehrlich.

Die Regelungseinheit 13 dient insbesondere zur Aufteilung der Stoffströme in der Trenn-/Reinigungseinheit 5. Die Regelungseinheit 13 ist derart eingerichtet, dass der von der Trenn-/Reinigungseinheit 5 in die Verstromungseinheit 6 geförderte, gereinigte Wasserstoffgasstrom und/oder das Restgasgemisch zur Förderung in die thermische Verwertungseinheit 7 den aktuellen Prozessparametern entsprechend gesteuert werden. Für den Mengenstrom des gereinigten Wasserstoffgases ist die zur Verfügung zu stellende elektrische Leistung wesentlich. Für die Menge des Restgasgemisches ist insbesondere der Wärmebedarf in der Dehydriereinheit maßgeblich.

Nachfolgend werden anhand von Fig. 2 Aufbau und Funktion der Trenn-/Reinigungseinheit 5 näher erläutert. Die Trenn-/Reinigungseinheit 5 weist ein Gehäuse 18 auf, das im Wesentlichen bezüglich einer Längsachse 19 zylinderförmig ausgeführt ist. Das Gehäuse 18 weist eine Zuführöffnung 20 zum Zuführen des Gasgemisches aus der Dehydriereinheit 4 auf. An die Zuführöffnung 20 ist die Fluidleitung 3 angeschlossen. Die Zuführöffnung 20 ist an einem ersten, in Fig. 2 links dargestellten Stirnseitenende 21 des Gehäuses 18 angeordnet. An einem dem ersten Stirnseitenende 21 gegenüberliegenden zweiten Stirnseitenende 22 ist eine Restgasgemisch-Abführöffnung 23 vorgesehen. Über die Restgasgemisch-Abführöffnung 23 ist die weitere Fluidleitung 3 angeschlossen und mit der Wascheinheit 8 verbunden.

An einer Zylindermantelwand des Gehäuses 18 ist eine Wasserstoffgas-Abführöffnung 24 vorgesehen, an die die weitere Fluidleitung 3 angeschlossen ist, die die Trenn-/Reinigungseinheit 5 mit der Verstromungseinheit 6 verbindet.

In dem Gehäuse 18 sind mehrere Trennmembranen 17 angeordnet. Die Trennmembranen 17 sind beispielsweise in Form von Hohlfäden ausgeführt. Die Wirkungsweise der Trennmembranen 17 beruht auf dem Prinzip der selektiven Permeation durch die Membranoberfläche.

Um Wasserstoffgas, das mit dem Gasgemisch aus der Dehydriereinheit 4 in die Trenn-/Reinigungseinheit 5 zugeführt wird, durch die Gasmembranen zu permeieren, ist eine Partialdruckdifferenz des Gasgemisches zwischen der Restgasgemisch-Seite und der Wasserstoffgas-Seite erforderlich. Die Restgasgemisch-Seite der Trennmembranen 17 wird durch das Innenlumen, also die Innenseite, der Trennmembranen 17 gebildet. Die Wasserstoffgas-Seite wird durch die Außenseiten der Trennmembranen 17, also insbesondere den Zwischenraum zwischen den einzelnen Trennmembranen 17, gebildet. Je größer die Druckdifferenz ist, desto mehr Wasserstoffgas permeiert durch die einzelnen Trennmembranen 17.

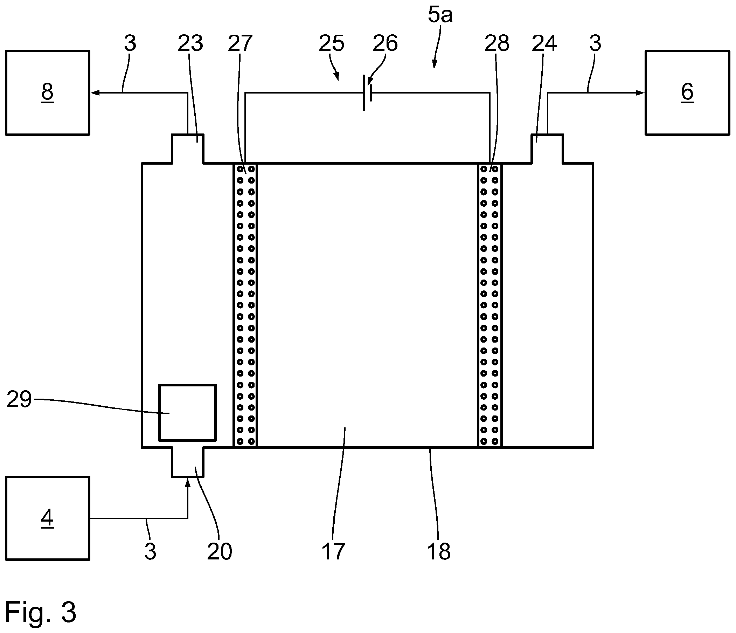

Im Folgenden wird unter Bezugnahme auf Fig. 3 ein zweites Ausführungsbeispiel einer Trenn-/Reinigungseinheit beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem vorherigen Ausführungsbeispiel besteht darin, dass die Trenn-/Reinigungseinheit 5a zusätzlich zu der Trennmembran 17 einen elektrochemischen Kompressor 25 aufweist. Der elektrochemische Kompressor 25 umfasst eine Spannungsquelle 26, die mit einer Anode 27 und einer Katode 28 verbunden ist. Zwischen der Anode 27 und der Katode 28 ist die Trennmembran 17 angeordnet. Die Anode 27, die Katode 28 und die Trennmembran 17 sind innerhalb des Gehäuses 18 angeordnet. An einer der Trennmembran 17 abgewandten Seite der Anode sind in dem Gehäuse 18 die Zuführöffnung 20 und die Restgasgemisch-Abführöffnung 23 angeordnet. Die Wasserstoffgas-Abführöffnung 24 ist an einer der Trennmembran 17 gegenüberliegenden Seite der Katode 28 des Gehäuses 18 angeordnet.

Die Funktionsweise der Trenn-/Reinigungseinheit 5a entspricht im Wesentlichen der gemäß dem ersten Ausführungsbeispiel. Dadurch, dass über die Spannungsquelle zusätzlich eine Spannung angelegt wird, wird im Wesentlichen das Wirkprinzip einer Brennstoffzelle umgekehrt, also Wasserstoffgas durch die Trennmembran 17 von der Anode 27 zu der Katode 28 gefördert. Alle anderen Substanzen, insbesondere Verunreinigungen des Gasgemisches, können die Trennmembran 17 nicht durchdringen. Die Reinigung des Wasserstoffs ist integriert und dadurch vereinfacht. Dadurch, dass als zusätzliche Triebkraft für die Wasserstoffdurchdringung die elektrische Spannung dient, kann der mechanische Partialdruck kleiner gewählt werden und insbesondere auf den mechanischen Partialdruckunterschied verzichtet werden. Dadurch ist es möglich, den Absolutdruck in der Dehydriereinheit 4 zu reduzieren, sodass das Freisetzen des Wasserstoffgases insbesondere in einem Bereich zwischen 1,0 bara bis 1,5 bara stattfinden kann. Die Prozesstemperaturen betragen mindestens 200 °C und liegen insbesondere in einem Bereich zwischen 240 °C und 320 °C.

Ein solches Anwendungsbeispiel ist insbesondere einsetzbar für den Anwendungsfall einer Wasserstoff-Tankstelle. Durch die Kombination der Dehydriereinheit 4 mit einem elektrochemischen Kompressor als Trenn-/Reinigungseinheit 5 und der thermischen Verwertungseinheit 7 zur kontinuierlichen Belieferung einer Wasserstofftankstelle mit gasförmigem Wasserstoff wird eine besonders vorteilhafte Ausführung zur Bereitstellung von Wasserstoff gewährleistet. Diese kann ohne zusätzliche Reinigungsstufe und externe Zufuhr von Energie, insbesondere in Form von elektrischem Strom zum Heizen, betrieben werden. Der gasförmige Wasserstoff verfügt über die für die Anwendung notwendige Reinheit und das notwendige Druckniveau für die weitere Verdichtung auf 350 bis 700 bara für die Befüllung von PKW, Bussen oder Lieferfahrzeugen.

Gemäß dem gezeigten Ausführungsbeispiel ist der Trennmembran 17 eine Konditioniereinheit 29 vorgeschaltet. Die Konditioniereinheit 29 dient dazu, den der Trenn-/Reinigungseinheit 5a zugeführten Gasstrom hinsichtlich der Trennmembran 17 zu konditionieren, insbesondere den Feuchtegehalt zu regulieren. Die Konditioniereinheit 29 ist gemäß dem gezeigten Ausführungsbeispiel eine Einheit zur Regulierung der Feuchte des zugeführten Gasstroms. Die Konditioniereinheit 29 kann auch entfallen. Die Konditioniereinheit 29 kann zur Beeinflussung weiterer physikalischer Eigenschaften des Gasstroms, wie beispielsweise der Temperatur, dienen.

Die Konditioniereinheit 29 ist im Bereich der Zuführöffnung 20 innerhalb des Gehäuses 18 integriert angeordnet. Die Konditioniereinheit 29 kann auch als externe Komponente, die der Trenn-/Reinigungseinheit 5a vorgeschaltet ist, ausgeführt sein.

Typischerweise beträgt der Potenzialunterschied zwischen Anode 27 und Katode 28 etwa -0,03 V.

## Patentansprüche

1. Anlage zur Bereitstellung von Wasserstoffgas umfassend
a. eine Dehydriereinheit (4) zum Freisetzen eines Wasserstoffgas enthaltenden Gasgemisches aus einem zumindest teilweise beladenen Wasserstoffträgermedium,
b. eine mit der Dehydriereinheit (4) verbundene Trenn-/Reinigungseinheit (5; 5a) zum zumindest teilweisen Abtrennen von Wasserstoffgas aus dem Gasgemisch und zum Reinigen des abgetrennten Wasserstoffgases, wobei die Trenn-/Reinigungseinheit (5; 5a) eine Trennmembran (17) aufweist,
c. eine mit der Trenn-/Reinigungseinheit (5; 5a) verbundene Nutzeinheit (6) zum Nutzen des gereinigten Wasserstoffgases,
d. eine mit der Trenn-/Reinigungseinheit (5; 5a) verbundene thermische Verwertungseinheit (7) zum thermischen Verwerten eines Restgasgemisches, das der Teilstrom des Gasgemisches aus der Dehydriereinheit (4) ist, aus dem das Wasserstoffgas abgetrennt worden ist,
wobei die Nutzeinheit eine Verstromungseinheit (6) ist,
wobei die Trenn-/Reinigungseinheit (5; 5a) über eine erste Fluidleitung mit der Verstromungseinheit (6) und über eine zweite Fluidleitung mit der thermischen Verwertungseinheit (7) verbunden ist,
**dadurch gekennzeichnet, dass** die Verstromungseinheit (6) mit der thermischen Verwertungseinheit (7) zum Zuführen eines Abgasstroms aus der Verstromungseinheit (6) verbunden ist.

2. Anlage gemäß einem der vorstehenden Ansprüche, **dadurch gekennzeichnet, dass** die Trenn-/Reinigungseinheit (5a) einen elektrochemischen Kompressor (25) aufweist.

3. Anlage gemäß einem der vorstehenden Ansprüche, **gekennzeichnet durch** eine Wascheinheit (8) zum Waschen des Restgasgemisches aus der Trenn-/Reinigungseinheit (5; 5a), wobei die Wascheinheit (8) insbesondere stromaufwärts zur thermischen Verwertungseinheit (7) angeordnet ist.

4. Anlage gemäß einem der vorstehenden Ansprüche, **gekennzeichnet durch** eine Wärmeübertragungseinheit (11) zum Rückführen von Wärme aus der Verstromungseinheit (6) und/oder aus der thermischen Verwertungseinheit (7) in die Dehydriereinheit (4).

5. Verfahren zur Bereitstellung von Wasserstoffgas umfassend die Verfahrensschritte
- Freisetzen eines Wasserstoffgas enthaltenden Gasgemisches aus einem zumindest teilweise beladenen Wasserstoffträgermedium mittels einer Dehydriereinheit (4),
- zumindest teilweises Abtrennen von Wasserstoffgas aus dem Gasgemisch und Reinigen des abgetrennten Wasserstoffgases mittels einer mit der Dehydriereinheit (4) verbundenen Trenn-/Reinigungseinheit (5; 5a),
- wobei das zumindest teilweise Abtrennen von Wasserstoffgas aus dem Gasgemisch und Reinigen des abgetrennten Wasserstoffgases mittels einer Trennmembran (17) erfolgt,
- Verstromen des gereinigten Wasserstoffgases mittels einer mit der Trenn-/Reinigungseinheit (5; 5a) verbundenen Nutzeinheit (6),
- thermisches Verwerten eines Restgasgemisches mittels einer mit der Trenn-/Reinigungseinheit (5; 5a) verbundenen thermischen Verwertungseinheit (7), wobei das Restgasgemisch der Teilstrom des Gasgemisches aus der Dehydriereinheit (4) ist, aus dem das Wasserstoffgas abgetrennt worden ist,
**dadurch gekennzeichnet, dass** das zumindest teileweise Abtrennen eine Ausbeute des Wasserstoffgases bezogen auf das der Trenn-/Reinigungseinheit (5; 5a) zugeführte Gasgemisch von höchstens 80 % bewirkt.

6. Verfahren gemäß Anspruch 5, **dadurch gekennzeichnet, dass** das Reinigen des abgetrennten Wasserstoffgases durch elektrochemische Kompression erfolgt.

7. Verfahren gemäß einem der Ansprüche 5 oder 6, **dadurch gekennzeichnet, dass** das Freisetzen des Wasserstoffgas enthaltenden Gasgemisches bei einem Absolutdruck in einem Bereich von 1,0 bara bis 3,5 bara, insbesondere von 1,0 bara bis 2,0 bara, insbesondere von 1,0 bara bis 1,5 bara erfolgt.

8. Verfahren gemäß einem der Ansprüche 5 bis 7, **dadurch gekennzeichnet, dass** das Freisetzen des Wasserstoffgas enthaltenden Gasgemisches bei einer Temperatur von mindestens 200 °C, insbesondere in einem Bereich von 240 °C bis 320 °C erfolgt.

9. Verfahren gemäß einem der Ansprüche 5 bis 8, **dadurch gekennzeichnet, dass** das zumindest teilweise Abtrennen eine Ausbeute des Wasserstoffgases bezogen auf das der Trenn-/Reinigungseinheit (5; 5a) zugeführte Gasgemisch von höchstens 75% bewirkt.

10. Verfahren gemäß einem der Ansprüche 5 bis 9, **gekennzeichnet durch** ein Rückführen von Wärme aus der Verstromungseinheit (6) und/oder aus der thermischen Verwertungseinheit (7) in die Dehydriereinheit (4).

11. Verfahren gemäß einem der Ansprüche 5 bis 10, **dadurch gekennzeichnet, dass** das der als Verstromungseinheit (6) ausgeführten Nutzeinheit zugeführte gereinigte Wasserstoffgas lediglich anteilig verstromt wird und insbesondere ein nicht verstromter Wasserstoffgas-Reststrom aus der Verstromungseinheit (6) abgeführt und insbesondere der thermischen Verwertungseinheit (7) zugeführt wird.

## Claims

1. A system for providing hydrogen gas, comprising
a. a dehydrogenation unit (4) for release of a hydrogen gas-containing gas mixture from an at least partly laden hydrogen carrier medium,
b. a separation/purification unit (5; 5a), connected to the dehydrogenation unit (4), for at least partial separation of hydrogen gas from the gas mixture and for purifying the hydrogen gas separated, wherein the separation/purification unit (5; 5a) has a separation membrane (17),
c. a utilization unit (6), connected to the separation/purification unit (5; 5a), for utilizing the purified hydrogen gas,
d. a thermal conversion unit (7), connected to the separation/purification unit (5; 5a), for thermal conversion of a residual gas mixture, which is the substream of the gas mixture from the dehydrogenation unit (4) from which the hydrogen gas has been separated,
wherein the utilization unit is a power generation unit (6),
wherein the separation/purification unit (5; 5a) is connected to the power generation unit (6) via a first fluid conduit and to the thermal conversion unit (7) via a second fluid conduit,
**characterized in that** the power generation unit (6) is connected to the thermal conversion unit for supply of an offgas stream from the power generation unit (6).

2. The system as claimed in either of the preceding claims, **characterized in that** the separation/purification unit (5a) has an electrochemical compressor (25).

3. The system as claimed in any of the preceding claims, **characterized by** a scrubbing unit (8) for scrubbing the residual gas mixture from the separation/purification unit (5; 5a), wherein the scrubbing unit (8) is in particular arranged upstream of the thermal conversion unit (7).

4. The system as claimed in any of the preceding claims, **characterized by** a heat transfer unit (11) for recovering heat from the power generation unit (6) and/or from the thermal conversion unit (7) to the dehydrogenation unit (4).

5. A method of providing hydrogen gas, comprising the method steps of
- releasing a hydrogen gas-containing gas mixture from an at least partly laden hydrogen carrier medium by means of a dehydrogenation unit (4),
- at least partly separating hydrogen gas from the gas mixture and purifying the hydrogen gas separated by means of a separation/purification unit (5; 5a) connected to the dehydrogenation unit (4),
- wherein the at least partial separation of hydrogen gas from the gas mixture and purification of the hydrogen gas separated is effected by means of a separation membrane (17),
- converting the purified hydrogen gas to power by means of a utilization unit (6) connected to the separation/purification unit (5; 5a),
- thermally converting a residual gas mixture by means of a thermal conversion unit (7) connected to the separation/purification unit (5; 5a), wherein the residual gas mixture is the substream of the gas mixture from the dehydrogenation unit (4) from which the hydrogen gas has been separated,
**characterized in that** the at least partial removal results in a yield of the hydrogen gas based on the gas mixture that is fed to the separation/purification unit (5; 5a) of not more than 80%.

6. The method as claimed in claim 5, **characterized in that** the hydrogen gas separated is purified by electrochemical compression.

7. The method as claimed in claim 5 or 6, **characterized in that** the hydrogen gas-containing gas mixture is released at an absolute pressure within a range from 1.0 bara to 3.5 bara, in particular from 1.0 bara to 2.0 bara, in particular from 1.0 bara to 1.5 bara.

8. The method as claimed in any of claims 5 to 7, **characterized in that** the hydrogen gas-containing gas mixture is released at a temperature of at least 200°C, in particular within a range from 240°C to 320°C.

9. The method as claimed in any of claims 5 to 8, **characterized in that** the at least partial removal results in a yield of the hydrogen gas based on the gas mixture that is fed to the separation/purification unit (5; 5a) of not more than 75%.

10. The method as claimed in any of claims 5 to 9, **characterized by** recovering of heat from the power generation unit (6) and/or from the thermal conversion unit (7) to the dehydrogenation unit (4).

11. The method as claimed in any of claims 5 to 10, **characterized in that** the purified hydrogen gas supplied to the utilization unit in the form of a power generation unit (6) is only partly used for power generation, and a residual hydrogen gas stream that has not been used for power generation is in particular removed from the power generation unit (6) and in particular supplied to the thermal conversion unit (7).

## Revendications

1. Installation de production d'hydrogène gazeux comprenant
a. une unité de déshydrogénation (4) pour libérer un mélange gazeux contenant de l'hydrogène gazeux à partir d'un milieu porteur d'hydrogène au moins partiellement chargé,
b. une unité de séparation/purification (5 ; 5a) reliée à l'unité de déshydrogénation (4) pour séparer au moins partiellement l'hydrogène gazeux du mélange gazeux et pour purifier l'hydrogène gazeux séparé, l'unité de séparation/purification (5 ; 5a) présentant une membrane de séparation (17),
c. une unité utile (6) reliée à l'unité de séparation/purification (5 ; 5a) pour utiliser l'hydrogène gazeux purifié,
d. une unité de valorisation thermique (7) reliée à l'unité de séparation/purification (5 ; 5a) pour la valorisation thermique d'un mélange gazeux résiduel qui est le flux partiel du mélange gazeux provenant de l'unité de déshydrogénation (4), duquel l'hydrogène gazeux a été séparé,
l'unité utile étant une unité de production d'électricité (6),
dans laquelle l'unité de séparation/purification (5 ; 5a) est reliée à l'unité de production d'électricité (6) par une première conduite de fluide et à l'unité de valorisation thermique (7) par une deuxième conduite de fluide,
**caractérisée en ce que** l'unité de production d'électricité (6) est connectée à l'unité de valorisation thermique (7) pour fournir un flux de gaz d'échappement provenant de l'unité de production d'électricité (6).

2. Installation selon l'une quelconque des revendications précédentes, **caractérisée en ce que** l'unité de séparation/purification (5a) comprend un compresseur électrochimique (25).

3. Installation selon l'une quelconque des revendications précédentes, **caractérisée par** une unité de lavage (8) pour laver le mélange gazeux résiduel provenant de l'unité de séparation/purification (5 ; 5a), l'unité de lavage (8) étant en particulier disposée en amont de l'unité de valorisation thermique (7).

4. Installation selon l'une quelconque des revendications précédentes, **caractérisée par** une unité de transfert de chaleur (11) pour recycler la chaleur de l'unité de production d'électricité (6) et/ou de l'unité de valorisation thermique (7) dans l'unité de déshydrogénation (4).

5. Procédé de préparation d'hydrogène gazeux comprenant les étapes de procédé suivantes
- libération d'un mélange gazeux contenant de l'hydrogène gazeux à partir d'un milieu porteur d'hydrogène au moins partiellement chargé, au moyen d'une unité de déshydrogénation (4),
- séparation au moins partielle de l'hydrogène gazeux du mélange gazeux et purification de l'hydrogène gazeux séparé au moyen d'une unité de séparation/purification (5 ; 5a) reliée à l'unité de déshydrogénation (4),
- dans lequel la séparation au moins partielle de l'hydrogène gazeux du mélange gazeux et la purification de l'hydrogène gazeux séparé s'effectuent au moyen d'une membrane de séparation (17),
- alimentation en électricité de l'hydrogène gazeux purifié au moyen d'une unité utile (6) reliée à l'unité de séparation/purification (5 ; 5a),
- valorisation thermique d'un mélange gazeux résiduel au moyen d'une unité de valorisation thermique (7) reliée à l'unité de séparation/purification (5 ; 5a), le mélange gazeux résiduel étant le flux partiel du mélange gazeux provenant de l'unité de déshydrogénation (4), duquel l'hydrogène gazeux a été séparé,
**caractérisé en ce que** la séparation au moins partielle provoque un rendement d'hydrogène gazeux par rapport au mélange gazeux amené à l'unité de séparation/purification (5 ; 5a) de 80 % au maximum.

6. Procédé selon la revendication 5, **caractérisé en ce que** la purification de l'hydrogène gazeux séparé est effectuée par compression électrochimique.

7. Procédé selon l'une quelconque des revendications 5 ou 6, **caractérisé en ce que** la libération du mélange gazeux contenant de l'hydrogène gazeux s'effectue à une pression absolue comprise dans une plage allant de 1,0 bara à 3,5 bara, en particulier de 1,0 bara à 2,0 bara, en particulier de 1,0 bara à 1,5 bara.

8. Procédé selon l'une quelconque des revendications 5 à 7, **caractérisé en ce que** la libération du mélange gazeux contenant de l'hydrogène gazeux s'effectue à une température d'au moins 200°C, en particulier dans une plage de 240°C à 320°C.

9. Procédé selon l'une quelconque des revendications 5 à 8, **caractérisé en ce que** la séparation au moins partielle provoque un rendement d'hydrogène gazeux par rapport au mélange gazeux amené à l'unité de séparation/purification (5 ; 5a) d'au plus 75 %.

10. Procédé selon l'une quelconque des revendications 5 à 9, **caractérisé par** un recyclage de la chaleur provenant de l'unité de production d'électricité (6) et/ou de l'unité de valorisation thermique (7) vers l'unité de déshydrogénation (4).

11. Procédé selon l'une quelconque des revendications 5 à 10, **caractérisé en ce que** l'hydrogène gazeux purifié amené à l'unité utile réalisée sous forme d'unité de production d'électricité (6) est transformé en courant uniquement en partie et en particulier un flux résiduel d'hydrogène gazeux non transformé en courant est évacué de l'unité de production d'électricité (6) et amené en particulier à l'unité de valorisation thermique (7).
